# EUROPEAN PATENT SPECIFICATION

(11) **EP 3 700 301 B1**
(45) Date of publication and mention of the grant of the patent: **30.03.2022**
(21) Application number: 18868907.9
(22) Date of filing: 21.08.2018
(51) Int. Cl.: H05B 6/14, F16C 13/00

(54) **INDUCTION HEATING ROLLER AND SPUN YARN DRAWING DEVICE**
INDUKTIONSHEIZWALZE UND SPINNFADENZIEHVORRICHTUNG
ROULEAU DE CHAUFFAGE PAR INDUCTION ET DISPOSITIF D'ÉTIRAGE DE FILÉ

(30) Priority: 17.10.2017 JP 2017200810
(43) Date of publication of application: 26.08.2020
(73) Proprietor: TMT Machinery, Inc., Osaka-shi, Osaka 541-0041 (JP)
(72) Inventor: KAGATA, Kakeru, Kyoto-shi, Kyoto 612-8686 (JP); MORINAGA, Ryo, Kyoto-shi, Kyoto 612-8686 (JP)
(74) Representative: Hoffmann Eitle
(86) International application number: PCT/JP2018/030735
(87) International publication number: WO 2019/077864

(56) References cited:
- JP-A- S5 933 476
- JP-A- H09 127 810
- JP-A- 2018 035 488
- JP-B1- S4 746 141
- JP-B1- S4 914 827
- JP-U- S60 136 375
- US-A- 5 768 673
- US-A1- 2013 306 625

## Description

### [Technical Field]

The present invention relates to a heating roller and a spun yarn drawing apparatus.

### [Background Art]

For example, as shown in Patent Literature 1, an induction heating roller which is configured to heat a roller surface by induction heating using a coil has been known. In such an induction heating roller, it is difficult to arrange an amount of heat generated by the induction heating to be uniform in the axial direction, with the result that the temperature of the roller surface tends to be uneven in the axial direction. The induction heating roller of Patent Literature 1 is therefore arranged such that a jacket chamber in which a gas-liquid two-phase heating medium is enclosed extends in the axial direction at around a surface of a roller main body. Because this jacket chamber functions as a heat pipe, the temperature of the roller surface is equalized in the axial direction.

US 2013/306625 A1, US 5 768 673 A and JP S59 33476 A disclose a heating roller according to the preamble of claim 1.

### [Citation List]

### [Patent Literatures]

[Patent Literature 1] Japanese Laid-Open Patent Publication No. 2003-100437

### [Summary of Invention]

### [Technical Problem]

In the arrangement in which the heat pipe (jacket chamber) is provided in the roller main body as in Patent Literature 1, the roller main body is required to be thick in order to accommodate the heat pipe therein. As a result, the heat capacity of the roller main body is large and hence the roller surface cannot be effectively heated.

Under this circumstance, the inventors of the subject application provided a cylindrical heat equalizer having higher heat conduction than the roller main body to be in contact with an inner circumferential surface of a heating target. Because the heat equalizer in contact with the roller main body functions as a heat pipe, the temperature distribution in the axial direction of the roller surface is equalized. Furthermore, because the heat equalizer is cylindrical, it is unnecessary to provide a structure for supporting the heat equalizer radially inside the heat equalizer. It is therefore possible to reduce the thickness of the roller main body. As a result, the roller surface is efficiently heated. Such a cylindrical heat equalizer is effective not only for the induction heating roller but also for heating rollers heated by other heating methods.

A material of the heat equalizer is, for example, a carbon fiber composite which excels in heat conduction and lightness. The linear expansion coefficient of the carbon fiber composite, however, is very small. For this reason, the roller main body expands significantly more than the heat equalizer in the induction heating, with the result that a gap is formed between the roller main body and the heat equalizer. Heat conduction between the roller main body and the heat equalizer becomes hindered, and the heat equalization effect of the heat equalizer is not sufficiently exerted.

In order to solve the problem above, an object of a heating roller of the present invention is to prevent deterioration of a heat equalizing effect of a heat equalizer due to a gap formed by a thermal expansion difference, when the cylindrical heat equalizer which is higher in thermal conductivity than and lower in linear expansion coefficient than a roller main body is provided in the heating roller.

### [Solution to Problem]

A heating roller of the present invention includes: a roller main body which includes a cylindrical heating target; and a cylindrical heat equalizer which is provided to be in contact with an inner circumferential surface of the heating target, the heat equalizer being higher in heat conductivity than and lower in linear expansion coefficient than the roller main body, heat equalization pieces each extending in an axial direction being lined up in a circumferential direction so as to form the cylindrical heat equalizer, and the heating roller further including a pressing mechanism which is configured to press each of the heat equalization pieces toward the inner circumferential surface of the heating target.

In the present invention, the cylindrical heat equalizer is constituted by plural heat equalization pieces, and each heat equalization piece is pressed onto the inner circumferential surface of the heating target by the pressing mechanism. For this reason, even when the roller main body expands significantly more than the heat equalizer in induction heating, the contact state between each heat equalization piece and the inner circumferential surface of the heating target is maintained. It is therefore possible to prevent the deterioration of the heat equalizing effect of the heat equalizer. In this connection, the state in which the heat equalization piece is in contact with the inner circumferential surface of the heating target may be maintained by, for example, adhering the heat equalization pieces to the inner circumferential surface of the heating target. However, in this case, the adhered part may be broken when relative displacement in the axial direction or the circumferential direction occurs due to a difference in expansion between the roller main body and the heat equalizer. In this regard, in the present invention, each heat equalization piece is simply pressed toward the inner circumferential surface of the heating target. The heat equalization pieces are therefore allowed to be displaced in the axial direction and the circumferential direction relative to the heating target. The problem above does not therefore occur in the present embodiment.

The present invention is preferably arranged such that a coil which is provided radially inside the heating target is further included, and the heating target being induction-heated by the coil.

In such an induction-heated heating roller, it is particularly difficult to equalize the temperature distribution of the heating target in the axial direction. The present invention which makes it possible to reliably maintain the heat equalizing effect of the heat equalizer in induction heating is therefore effective for the heating roller.

The present invention is preferably arranged such that each of the heat equalization pieces has a radially outer surface which is circular-arc-shaped in a cross section orthogonal to the axial direction.

With this arrangement, the radially outer surface of the heat equalization piece extends along the inner circumferential surface of the heating target and hence the contact area between the heat equalization piece and the heating target is large. It is therefore possible to further improve the heat equalizing effect.

The present invention is preferably arranged such that the pressing mechanism is provided outside the heat equalization pieces in the axial direction.

When the pressing mechanism is provided outside the heat equalization pieces in the axial direction in this way, it is unnecessary to provide the pressing mechanism at a central portion of the roller main body, and hence it is possible to maintain a suitable rotation balance of the roller main body. In the induction heating, in addition to the above, the number of magnetic fluxes penetrating the pressing mechanism can be reduced, and hence the heating efficiency of the roller main body can be improved.

The present invention is preferably arranged such that at least one end face in the axial direction of each of the heat equalization pieces is a tapered surface which is inclined radially outward and axially outward, and, the pressing mechanism presses the tapered surface in the axial direction.

With this arrangement, as the pressing mechanism presses the tapered surface of the heat equalization piece in the axial direction, the heat equalization piece is pressed radially outward, i.e., toward the inner circumferential surface of the heating target. For this reason, even when the pressing mechanism is provided outside the heat equalization pieces in the axial direction, the heat equalization pieces are pressed toward the inner circumferential surface of the heating target, with a simple arrangement.

The present invention is preferably arranged such that the pressing mechanism includes: an interposed member which has a pressing surface making contact with the tapered surface and tapered to correspond to the tapered surface in shape; and at least one biasing member which is configured to bias the interposed member in the axial direction to press the tapered surface in the axial direction by the pressing surface.

Because the interposed member is provided between the biasing member and the heat equalization piece, the tapered surface is reliably pressed in the axial direction by the pressing surface, and hence the heat equalization piece is further effectively pressed toward the inner circumferential surface of the heating target.

The present invention is preferably arranged such that the interposed member is an annular member which makes contact with the tapered surface of each of the heat equalization pieces.

Because it is unnecessary to provide an interposed member for each heat equalization piece and only one interposed member is required, the arrangement is advantageous in terms of cost and assembling efficiency.

The present invention is preferably arranged such that the biasing members are provided at regular intervals in the circumferential direction.

With this arrangement, all heat equalization pieces are evenly pressed by one interposed member. The heat equalization pieces are therefore evenly pressed toward the inner circumferential surface of the heating target.

The present invention is preferably arranged such that both end surfaces in the axial direction of each of the heat equalization pieces are tapered surfaces, the pressing mechanism is provided only on one side of each of the heat equalization pieces in the axial direction, and the roller main body has an engaging surface which is tapered to correspond in shape to the tapered surface on the other side of each of the heat equalization pieces in the axial direction.

With this arrangement, one tapered surface of the heat equalization piece is pressed by the pressing mechanism whereas the other tapered surface is pressed by reaction force from the engaging surface. As such, the heat equalization piece is evenly pressed radially outward, and the entire heat equalization piece suitably makes contact with the inner circumferential surface of the heating target. Furthermore, because the pressing mechanism is provided only on one side of the heat equalization piece, the number of components is small.

The present invention is preferably arranged such that the roller main body is cantilevered, and the pressing mechanism is provided on a base end side of the roller main body in the axial direction.

Because the roller main body is cantilevered, parts of the leading end portion of the roller main body exposed to the outside air are large as compared to the base end portion. For this reason, heat dissipation and temperature decrease are facilitated. For this reason, as the pressing mechanism is provided on the base end side of the roller main body, it is possible to press the heat equalization piece toward the leading end side and cause the heat equalization piece to reliably make contact with the leading end portion of the roller main body. As a result, heat transfer to the leading end portion of the roller main body via the heat equalization piece is facilitated, temperature decrease at the leading end portion of the roller main body is suppressed, and the heat equalizing effect is improved.

The present invention is preferably arranged such that the heat equalizer is made of a carbon fiber composite.

The carbon fiber composite is suitable for a material of the heat equalizer on account of high heat conduction and lightness. However, the linear expansion coefficient of the carbon fiber composite is very small, and hence a gap tends to be formed between the roller main body and the heat equalizer when heated. In the present invention, because such a gap is eliminated by the pressing mechanism, the carbon fiber composite can be employed as a material of the heat equalizer.

A spun yarn drawing apparatus of the present invention includes any one of the above-described heating rollers, yarns being wound on a surface of the heating roller to be aligned in the axial direction.

The heating roller of the present invention prevents the heat equalizing effect of the heat equalizer from being deteriorated as described above, with the result that the temperature distribution in the axial direction of the surface of the heating roller is equalized. Differences in quality between the yarns wound on the heating roller are therefore suppressed, and high-quality yarns are produced.

### [Brief Description of Drawings]

FIG. 1 is a schematic diagram of a spun yarn take-up machine including an induction heating roller of an embodiment.
FIG. 2 is a cross section of the induction heating roller of the embodiment.
FIG. 3(a) is a perspective view of a heat equalizer. FIG. 3(b) and FIG. 3(c) are cross sections of a heat equalization piece.
FIG. 4 is a table of physical properties of the roller main body and the heat equalizer.
FIG. 5 is an enlarged cross section of the heat equalization piece and a pressing mechanism and their surroundings.
FIG. 6 is a cross section of an induction heating roller of a modification.

### [Description of Embodiments]

### (Spun Yarn Take-Up Machine)

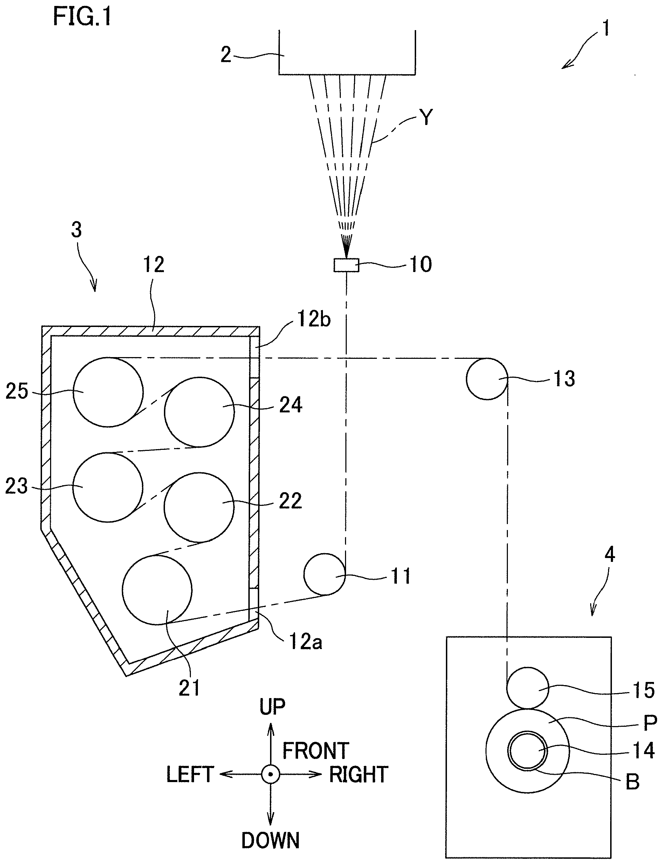

The following will describe an embodiment of the present invention. FIG. 1 is a schematic diagram of a spun yarn take-up machine including an induction heating roller of the present embodiment. As shown in FIG. 1, the spun yarn take-up machine 1 is configured to draw yarns Y serially spun out from a spinning apparatus 2 by a spun yarn drawing apparatus 3, and then to wind the yarns Y by a yarn winding apparatus 4. Hereinafter, explanations will be given with reference to the directions shown in the figures.

The spinning apparatus 2 is configured to generate the yarns Y by continuously spinning out a molten fibrous material such as polyester. To the yarns Y spun out from the spinning apparatus 2, oil is applied at an oil guide 10. The yarns Y are then sent to the spun yarn drawing apparatus 3 via a guide roller 11.

The spun yarn drawing apparatus 3 is an apparatus for drawing the yarns Y and is provided below the spinning apparatus 2. The spun yarn drawing apparatus 3 includes plural godet rollers 21 to 25 housed in a thermal insulation box 12. The godet rollers 21 to 25 are induction heating rollers which are rotationally driven by a motor and are induction-heated by a coil. Yarns Y are wound onto the godet rollers 21 to 25. At a lower part of a right side portion of the thermal insulation box 12, an inlet 12a is formed to introduce yarns Y into the thermal insulation box 12. At an upper part of the right side portion of the thermal insulation box 12, an outlet 12b is formed to take yarns Y out from the thermal insulation box 12. The yarns Y are wound onto each of the godet rollers 21 to 25 at a winding angle of less than 360 degrees. The yarns Y are wound onto the godet rollers 21 to 25 in order, from the lowest godet roller 21.

The lower three godet rollers 21 to 23 are preheating rollers for preliminarily heating the yarns Y before drawing them. The roller surface temperature of each of these rollers is arranged to be equal to or higher than the glass transition temperature of the yarns Y (e.g., set at about 90 to 100 degrees centigrade). Meanwhile, the upper two godet rollers 24 and 25 are conditioning rollers for thermally setting the drawn yarns Y. The roller surface temperature of each of these rollers is arranged to be higher than the roller surface temperatures of the lower three godet rollers 21 to 23 (e.g., set at about 150 to 200 degrees centigrade). The yarn feeding speeds of the upper two godet rollers 24 and 25 are higher than those of the lower three godet rollers 21 to 23.

The yarns Y introduced into the thermal insulation box 12 through the inlet 12a are, to begin with, preliminarily heated to a drawable temperature while being transferred by the godet rollers 21 to 23. The preliminarily-heated yarns Y are drawn on account of a difference in yarn feeding speed between the godet roller 23 and the godet roller 24. The yarns Y are then further heated while being transferred by the godet rollers 24 and 25, with the result that the drawn state is thermally set. The yarns Y having been drawn in this way go out from the thermal insulation box 12 through the outlet 12b.

The yarns Y drawn by the spun yarn drawing apparatus 3 are sent to the yarn winding apparatus 4 via a guide roller 13. The yarn winding apparatus 4 is an apparatus for winding the yarns Y and is provided below the spun yarn drawing apparatus 3. The yarn winding apparatus 4 includes members such as a bobbin holder 14 and a contact roller 15. The bobbin holder 14 is cylindrical in shape and extends in the front-rear direction. The bobbin holder 14 is rotationally driven by an unillustrated motor. To the bobbin holder 14, bobbins B are attached along the axial direction to be side by side. By rotating the bobbin holder 14, the yarn winding apparatus 4 simultaneously winds the yarns Y onto the bobbins B, so as to produce packages P. The contact roller 15 makes contact with the surfaces of the packages P to adjust the shape of each package P by applying a predetermined contact pressure to each package P.

### (Induction Heating Roller)

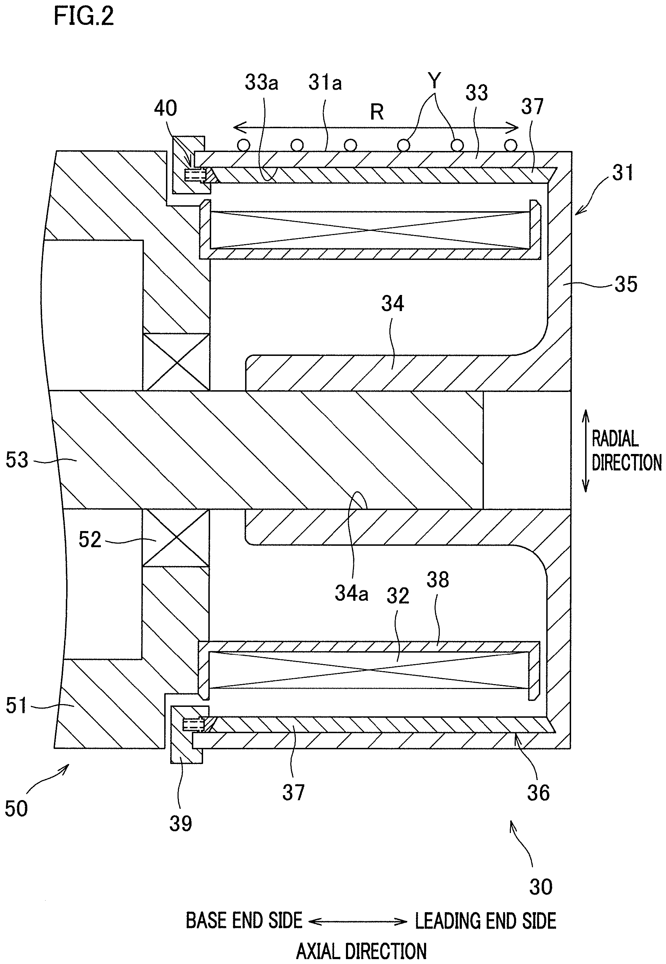

FIG. 2 is a cross section of the induction heating roller 30 of the present embodiment. At least one of the godet rollers 21 to 25 shown in FIG. 1 may be the induction heating roller 30 shown in FIG. 2. A roller main body 31 of the induction heating roller 30 is cantilevered by a motor 50 which rotationally drives the roller main body 31. Hereinafter, the motor 50 side in the axial direction will be referred to as a base end side, whereas the side opposite to the motor 50 side in the axial direction will be referred to as a leading end side.

The induction heating roller 30 includes the cylindrical roller main body 31 and a cylindrical coil 32 provided inside the roller main body 31. The induction heating roller 30 is configured to heat an outer circumferential surface 31a (hereinafter, a roller surface 31a) of the roller main body 31 by induction heating using the coil 32, so as to heat the yarns Y wound on the roller surface 31a. Meanwhile, the motor 50 is arranged such that an output shaft 53 of the motor 50 is rotatably supported by a bearing 52 of a housing 51.

The roller main body 31 is made of, for example, carbon steel which is a magnetic body and a conductor. The roller main body 31 is arranged such that a cylindrical heating target 33, a cylindrical shaft center part 34, and a disc-shaped end face part 35 are integrally formed. The heating target 33 is provided radially outside the coil 32. The shaft center part 34 is provided radially inside the coil 32. The end face part 35 connects a leading end portion of the heating target 33 with a leading end portion of the shaft center part 34. A base end portion of the roller main body 31 is open, and the output shaft 53 of the motor 50 is inserted therein. The output shaft 53 is fixed to a shaft inserting hole 34a which is formed in the shaft center part 34. This arrangement allows the roller main body 31 and the output shaft 53 to rotate together.

A cylindrical heat equalizer 36 is provided at a location which is radially inside the heating target 33 of the roller main body 31 and radially outside the coil 32. The heat equalizer 36 is made of a C/C composite (carbon fiber reinforced-carbon matrix-composite) which is a composite material of carbon fibers and graphite. The heat equalizer 36 has higher heat conductivity than the roller main body 31 and has a function of equalizing the temperature distribution of the heating target 33 in the axial direction. The outer diameter of the heat equalizer 36 is arranged to be substantially identical with the inner diameter of the heating target 33. The heat equalizer 36 is in contact with an inner circumferential surface 33a of the heating target 33. In the roller surface 31a, if an axially-extending region where the yarns Y are wound is a wound region R, the heat equalizer 36 is provided over a range including the wound region R in the axial direction. The heat equalizer 36 will be detailed later.

The coil 32 is arranged such that conducting wires are wound onto a cylindrical bobbin member 38. The bobbin member 38 is, for example, attached to the housing 51 of the motor 50. When a high-frequency current is supplied from an unillustrated power source to the coil 32, an eddy current is generated at the heating target 33 by alternating fluxes penetrating the heating target 33, with the result that the heating target 33 is induction-heated. The base end portion of the heating target 33 is covered with an annular cover member 39.

### (Heat Equalizer)

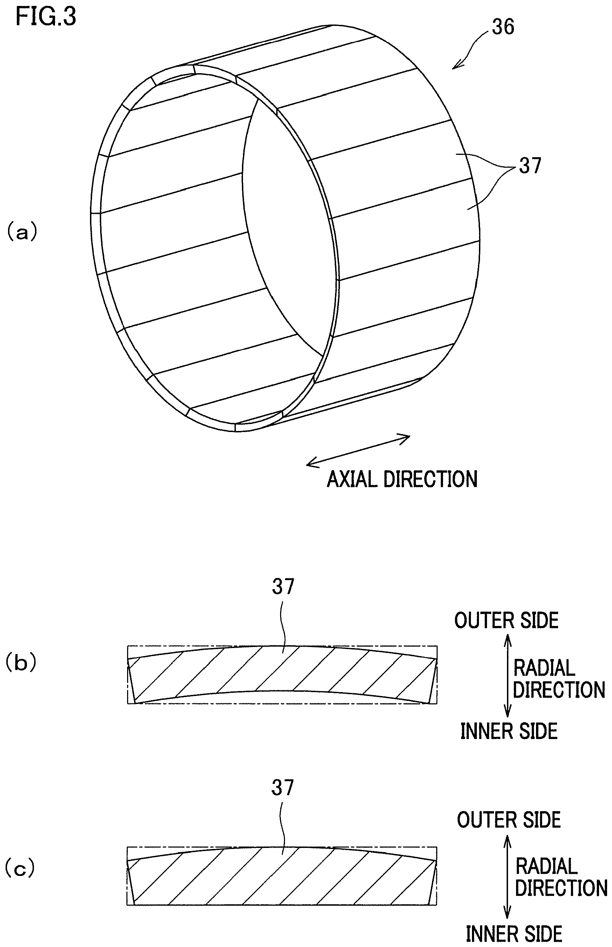

The heat equalizer 36 is detailed below. FIG. 3(a) is a perspective view of the heat equalizer 36. FIG. 3(b) and FIG. 3(c) are cross sections of a heat equalization piece 37 constituting the heat equalizer 36, which are taken along a direction orthogonal to the axial direction. As shown in FIG. 3(a), the heat equalizer 36 is cylindrical in overall shape as plural heat equalization pieces 37 extending in the axial direction are aligned in the circumferential direction. As shown in FIG. 3(b) and FIG. 3(c), the radially outer surface of each heat equalization piece 37 is circular-arc-shaped in a cross section orthogonal to the axial direction. The radially inner surface of the heat equalization piece 37 is not required to have a specific shape. For example, the surface may be circular-arc-shaped as shown in FIG. 3(b), or may be linear as shown in FIG. 3(c).

The C/C composite of which the heat equalizer 36 is made is manufactured by laminating layers of carbon fibers together with a matrix material (base material) and baking the layers at a high pressure and temperature. On this account, the C/C composite is typically plate-shaped, and is not easily molded into a cylindrical shape. For this reason, in the present embodiment, as indicated by dashed lines in FIG. 3(b) and FIG. 3(c), the heat equalization piece 37 is manufactured in such a way that a plate member which is rectangular in cross section is manufactured, and then parts of the plate member are cut off.

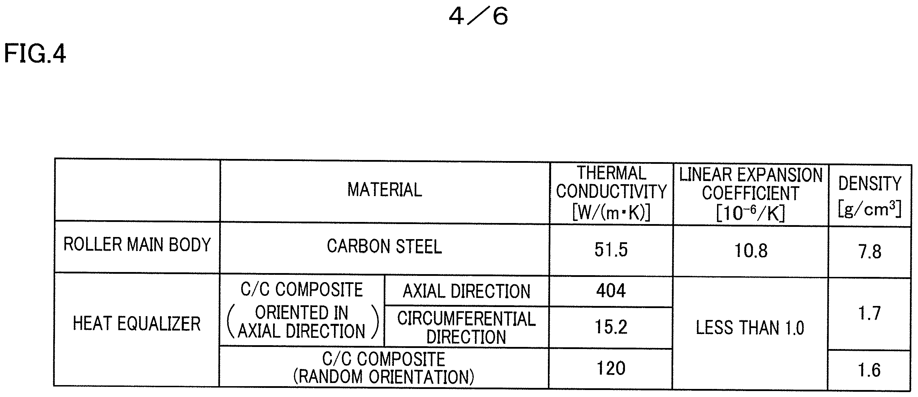

FIG. 4 is a table of physical properties of the roller main body 31 and the heat equalizer 36. The orientations of the carbon fibers of the C/C composite are adjustable when manufactured. "ORIENTED IN AXIAL DIRECTION" in the table indicates that the carbon fibers are oriented in the axial direction, whereas "RANDOM ORIENTATION" indicates that the carbon fibers are not oriented in a particular direction. The heat conductivity is varied depending on the orientation of the carbon fibers. As described above, the heat equalizer 36 of the present embodiment equalizes the temperature distribution of the heating target 33 in the axial direction. It is therefore important to obtain high heat conductivity in the axial direction. For this reason, when the thermal conductivity of the heat equalizer is anisotropic, the heat conductivity in the present invention is heat conductivity in the axial direction. In the present embodiment, a C/C composite in which carbon fibers are oriented in the axial direction or randomly is used.

As clearly shown in FIG. 4, the C/C composite is suitable as a material of the heat equalizer 36 because of high heat conductivity and lightness in weight. However, the linear expansion coefficient is significantly low as compared to carbon steel. For this reason, the roller main body 31 expands significantly more than the heat equalizer 36 in the induction heating, with the result that a gap is formed between the heating target 33 and the heat equalizer 36. Heat conduction between the heating target 33 and the heat equalizer 36 becomes hindered, and the heat equalization effect of the heat equalizer 36 is not sufficiently exerted. To solve this problem, in the present embodiment, a pressing mechanism 40 (see FIG. 2) is provided to press the heat equalization pieces 37 constituting the heat equalizer 36 toward the inner circumferential surface 33a of the heating target 33, in order to keep each heat equalization piece 37 to be in contact with the heating target 33 in the induction heating.

### (Pressing Mechanism)

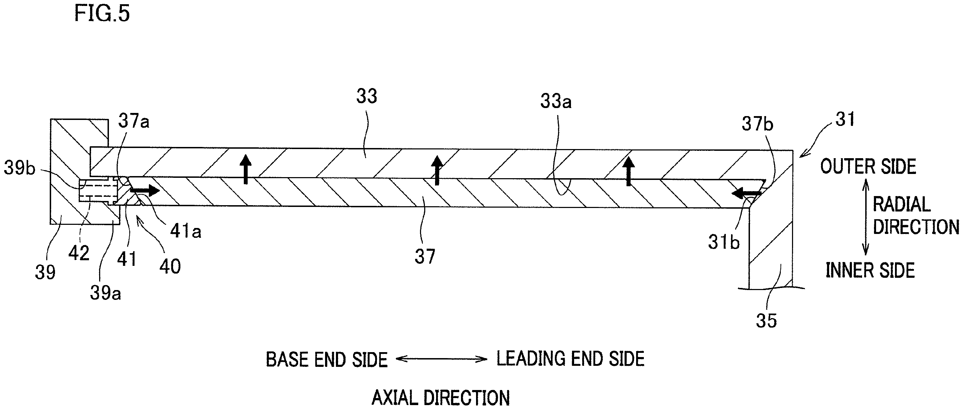

The pressing mechanism 40 will be detailed with reference to FIG. 5. FIG. 5 is an enlarged cross section of the heat equalization piece 37 and the pressing mechanism 40 and their surroundings. Both end faces in the axial direction of the heat equalization piece 37 are tapered surfaces 37a and 37b which are inclined radially outward and axially outward. In the present embodiment, the tapered surfaces 37a and 37b are identical in inclination angle.

The pressing mechanism 40 is provided on the base end side of the heat equalization piece 37. The pressing mechanism 40 includes an interposed member 41 adjacent to the base-end-side tapered surface 37a of the heat equalization piece 37 and a spring 42 which biases the interposed member 41 toward the leading end side. The interposed member 41 is an annular member extending in the circumferential direction of the roller main body 31. The interposed member 41 of the present embodiment is made of, for example, a ferrous material or a stainless streel material. The interposed member 41 includes a pressing surface 41a which is in contact with all heat equalization pieces 37 aligned in the circumferential direction. The pressing surface 41a is tapered to correspond to the shape of the tapered surface 37a. The interposed member 41 is sandwiched in the radial direction between the heating target 33 of the roller main body 31 and a regulatory portion 39a of a cover member 39. The spring 42 is provided on the base end side of the interposed member 41 and is housed in a concave portion 39b formed in the cover member 39. Springs 42 are provided at regular intervals in the circumferential direction. For example, one spring 42 may be provided for one heat equalization piece 37, plural springs 42 may be provided for one heat equalization piece 37, or one spring 42 may be provided for plural heat equalization pieces 37.

At an inner surface of the end face part 35 of the roller main body 31 (i.e., a part of the inner surface of the end face part 35 at around a corner portion formed between the end face part 35 and the heating target 33), an engaging surface 31b is formed to be tapered in accordance with the tapered surface 37b on the leading end side of the heat equalization piece 37. The heat equalization piece 37 is provided to be sandwiched between the interposed member 41 and the engaging surface 31b in the axial direction.

As the spring 42 biases the interposed member 41 toward the leading end side, the tapered surface 37a of the heat equalization piece 37 is pressed by the pressing surface 41a of the interposed member 41 toward the leading end side. This pressing force is converted to force which presses the heat equalization piece 37 radially outward by the tapered surface 37a. Furthermore, the tapered surface 37b of the heat equalization piece 37 is pressed toward the base end side by reaction force from the engaging surface 31b. This reaction force is also converted to force which presses the heat equalization piece 37 radially outward by the tapered surface 37b.

As such, as the tapered surfaces 37a and 37b on the both sides of the heat equalization piece 37 are pressed axially inward, the heat equalization piece 37 is pressed radially outward evenly in the axial direction (see arrows in FIG. 5). With this arrangement, even when the roller main body 31 expands significantly more than the heat equalizer 36 in induction heating, the contact state between the heating target 33 and the heat equalizer 36 is maintained as each heat equalization piece 37 is pressed onto the inner circumferential surface 33a of the heating target 33.

### (Advantageous Effects)

In the induction heating roller 30 (equivalent to a heating roller of the present invention) of the present embodiment, the cylindrical heat equalizer 36 is constituted by plural heat equalization pieces 37, and each heat equalization piece 37 is pressed onto the inner circumferential surface 33a of the heating target 33 by the pressing mechanism 40. For this reason, even when the roller main body 31 expands significantly more than the heat equalizer 36 in induction heating, the contact state between each heat equalization piece 37 and the inner circumferential surface 33a of the heating target 33 is maintained. It is therefore possible to prevent the deterioration of the heat equalizing effect of the heat equalizer 36. In this connection, the state in which the heat equalization piece 37 is in contact with the inner circumferential surface 33a of the heating target 33 may be maintained by, for example, adhering the heat equalization pieces 37 to the inner circumferential surface 33a of the heating target 33. However, in this case, the adhered part may be broken when relative displacement in the axial direction or the circumferential direction occurs due to a difference in expansion between the roller main body 31 and the heat equalizer 36. In this regard, in the present embodiment, each heat equalization piece 37 is simply pressed toward the inner circumferential surface 33a of the heating target 33. The heat equalization pieces 37 are therefore allowed to be displaced in the axial direction and the circumferential direction relative to the heating target 33. The problem above does not therefore occur in the present embodiment.

In the present embodiment, the coil 32 is provided radially inside the heating target 33, and the heating target 33 is induction-heated by the coil 32. In such an induction-heated heating roller 30, it is particularly difficult to equalize the temperature distribution of the heating target 33 in the axial direction. The present invention which makes it possible to reliably maintain the heat equalizing effect of the heat equalizer 36 in induction heating is therefore effective for the heating roller 30.

In the present embodiment, the radially outer surface of each heat equalization piece 37 is circular-arc-shaped in a cross section orthogonal to the axial direction. With this arrangement, the radially outer surface of the heat equalization piece 37 extends along the inner circumferential surface of the heating target 33 and hence the contact area between the heat equalization piece 37 and the heating target 33 is large. It is therefore possible to further improve the heat equalizing effect.

In the present embodiment, the pressing mechanism 40 is provided outside the heat equalization pieces 37 in the axial direction. When the pressing mechanism 40 is provided outside the heat equalization pieces 37 in the axial direction in this way, it is unnecessary to provide the pressing mechanism at a central portion of the roller main body 31, and hence it is possible to maintain a suitable rotation balance of the roller main body 31. In the induction heating, in addition to the above, the number of magnetic fluxes penetrating the pressing mechanism 40 can be reduced, and hence the heating efficiency of the roller main body 31 can be improved.

In the present embodiment, at least one end face in the axial direction of the heat equalization piece 37 is the tapered surface 37a inclined radially outward and axially outward, and the pressing mechanism 40 presses the tapered surface 37a in the axial direction. With this arrangement, as the pressing mechanism 40 presses the tapered surface 37a of the heat equalization piece 37 in the axial direction, the heat equalization piece 37 is pressed radially outward, i.e., toward the inner circumferential surface 33a of the heating target 33. For this reason, even when the pressing mechanism 40 is provided outside the heat equalization pieces 37 in the axial direction, the heat equalization pieces 37 are pressed toward the inner circumferential surface 33a of the heating target 33, with a simple arrangement.

In the present embodiment, the pressing mechanism 40 includes: the interposed member 41 which makes contact with the tapered surface 37a and has the pressing surface 41a tapered to correspond to the tapered surface 37a in shape; and the spring 42 (biasing member) which biases the interposed member 41 in the axial direction to press the tapered surface 37a in the axial direction by the pressing surface 41a. Because the interposed member 41 is provided between the spring 42 and the heat equalization piece 37, the tapered surface 37a is reliably pressed in the axial direction by the pressing surface 41a, and hence the heat equalization piece 37 is further effectively pressed toward the inner circumferential surface 33a of the heating target 33.

In the present embodiment, the interposed member 41 is an annular member making contact with the tapered surface 37a of each heat equalization piece 37. Because it is unnecessary to provide an interposed member 41 for each heat equalization piece 37 and only one interposed member 41 is required, the arrangement is advantageous in terms of cost and assembling efficiency.

In the present embodiment, the springs 42 are provided at regular intervals in the circumferential direction. With this arrangement, all heat equalization pieces 37 are evenly pressed by one interposed member 41. The heat equalization pieces 37 are therefore evenly pressed toward the inner circumferential surface 33a of the heating target 33.

In the present embodiment, the tapered surfaces 37a and 37b are formed on the both sides of the heat equalization piece 37 in the axial direction, the pressing mechanism 40 is provided only on one side of the heat equalization piece 37 in the axial direction, and the roller main body 31 has the engaging surface 31b which is tapered to correspond in shape to the tapered surface 37b of the heat equalization piece 37, which is the other tapered surface in the axial direction. With this arrangement, one tapered surface 37a of the heat equalization piece 37 is pressed by the pressing mechanism 40 whereas the other tapered surface 37b is pressed by reaction force from the engaging surface 31b. As such, the heat equalization piece 37 is evenly pressed radially outward, and the entire heat equalization piece 37 suitably makes contact with the inner circumferential surface 33a of the heating target 33. Furthermore, because the pressing mechanism 40 is provided only on one side of the heat equalization piece 37, the number of components is small.

In the present embodiment, the roller main body 31 is cantilevered, and the pressing mechanism 40 is provided on the base end side in the axial direction, where the roller main body 31 is cantilevered. Because the roller main body 31 is cantilevered, parts of the leading end portion of the roller main body 31 exposed to the outside air are large as compared to the base end portion. For this reason, heat dissipation and temperature decrease are facilitated. For this reason, as the pressing mechanism 40 is provided on the base end side of the roller main body 31, it is possible to press the heat equalization piece 37 toward the leading end side and cause the heat equalization piece 37 to reliably make contact with the leading end portion of the roller main body 31. As a result, heat transfer to the leading end portion of the roller main body 31 via the heat equalization piece 37 is facilitated, temperature decrease at the leading end portion of the roller main body 31 is suppressed, and the heat equalizing effect is improved.

In the present embodiment, the heat equalizer 36 is made of a C/C composite (carbon fiber composite). The carbon fiber composite is suitable for a material of the heat equalizer 36 on account of high heat conduction and lightness. However, the linear expansion coefficient of the carbon fiber composite is very small, and hence a gap tends to be formed between the roller main body 31 and the heat equalizer 36 when heated. With the present embodiment, because such a gap is eliminated by the pressing mechanism 40, the carbon fiber composite can be employed as a material of the heat equalizer 36.

In the present embodiment, plural yarns Y are wound on the surface of the induction heating roller 30 to be aligned in the axial direction. The induction heating roller 30 prevents the heat equalizing effect of the heat equalizer 36 from being deteriorated as described above, with the result that the temperature distribution in the axial direction of the surface of the induction heating roller 30 is equalized. Differences in quality between the yarns Y wound on the induction heating roller 30 are therefore suppressed, and high-quality yarns Y are produced.

### (Other Embodiments)

The following will describe modifications of the above-described embodiment.

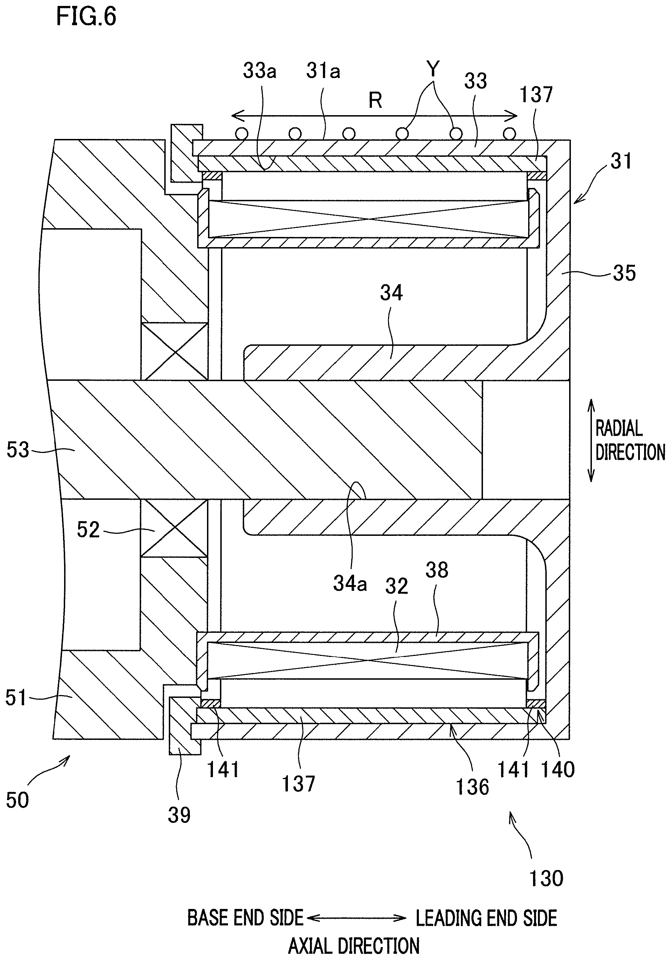

(1) In the embodiment above, the heating roller of the present invention is applied to the induction heating roller 30. The present invention, however, is applicable to those other than induction heating rollers.
(2) While in the embodiment above the pressing mechanism 40 is provided axially outside the heat equalization pieces 37, a pressing mechanism 140 may be provided radially inside heat equalization pieces 137, as shown in FIG. 6. FIG. 6 is a cross section of an induction heating roller 130 of a modification. Among components of the induction heating roller 130, components having the same structures as those in the induction heating roller 30 of the above-described embodiment are given the same reference numerals, and descriptions thereof are omitted. Being different from the heat equalization pieces 37, end faces in the axial direction of each of the heat equalization pieces 137 constituting a heat equalizer 136 are not tapered surfaces.

The pressing mechanism 140 is formed of two annular ring members 141. Each ring member 141 is made of a material (e.g., aluminum alloy or copper alloy) having a higher linear expansion coefficient than the roller main body 31. The two ring members 141 are fitted to the inside of the respective end portions in the axial direction of the heat equalization piece 137 by cool fitting. As the cool-fitted ring members 141 expand at room temperatures, the heat equalization piece 137 is pressed toward the inner circumferential surface 33a of the heating target 33. For this reason, even when the roller main body 31 expands in induction heating, the contact state between each heat equalization piece 137 and the inner circumferential surface 33a of the heating target 33 is maintained. The number and locations of the ring members 141 are not limited to the above-mentioned number and locations in this modification, and may be suitably changed.

By the cool fitting of the ring members 141, the pressing mechanism 140 is very easily constructed. However, when the pressing mechanism 140 is provided radially inside the heat equalization piece 137, the efficiency of heating the heating target 33 of the roller main body 31 may be deteriorated on account of increase in number of magnetic fluxes penetrating the pressing mechanism 140 (ring members 141). In this regard, when the pressing mechanism 40 is provided axially outside the heat equalization piece 37 as in the embodiment above, the number of magnetic fluxes penetrating the pressing mechanism 40 is reduced, and hence the heating efficiency of the roller main body 31 is advantageously improved.

(3) In the embodiment above, the pressing mechanism 40 is constituted by the interposed member 41 and the spring 42. Alternatively, the interposed member 41 may be omitted. The heat equalization piece 37 is pressed toward the inner circumferential surface 33a of the heating target 33 even when the heat equalization piece 37 is biased toward the leading end side directly by the spring 42, on account of reaction force from the engaging surface 31b to the tapered surface 37b on the leading end side. Alternatively, when the interposed member 41 is made of a material (e.g., aluminum alloy or copper alloy) having higher linear expansion coefficient than the heating target 33 (roller main body 31) and the heat equalization piece 37 (heat equalizer 36), the spring 42 may be omitted. In this case, the tapered surface 37a of the heat equalization piece 37 is pressed by the interposed member 41 which thermally expands.

(4) In the embodiment above, the end faces in the axial direction of the heat equalization piece 37 are tapered surfaces 37a and 37b which are identical in inclination angle. The tapered surfaces 37a and 37b, however, may not be identical in inclination angle. When one of the end faces in the axial direction of the heat equalization piece 37 is a tapered surface, the other end face may not be a tapered surface.

(5) In the embodiment above, the pressing mechanism 40 is provided only on one side of the heat equalization piece 37 in the axial direction. Alternatively, pressing mechanisms 40 may be provided on both sides of the heat equalization piece 37.

(6) In the embodiment above, the radially outer surface of the heat equalization piece 37 is circular-arc-shaped. In this connection, when, for example, each heat equalization piece 37 is narrow in the circumferential direction, the heat equalization pieces 37 can be arranged more or less along the inner circumferential surface of the heating target 33, even if the radially outer surface of each heat equalization piece 37 is not circular-arc-shaped.

(7) While in the embodiment above the roller main body 31 is made of carbon steel whereas the heat equalizer 36 is made of a C/C composite, the materials of these members are not limited to them. For example, the roller main body 31 may be made of aluminum or copper. Furthermore, the heat equalizer 36 may be made of CFRP (carbon fiber reinforced plastic) which is a composite material of carbon fibers and resin (e.g., epoxy resin), instead of the C/C composite. Furthermore, the heat equalizer 36 may be made of a metal sintered material which is higher in heat conductivity than and lower in linear expansion coefficient than the roller main body 31. It is usually difficult to mold a sintered material into a cylindrical shape. However, the heat equalizer 36 may be made of a sintered material when the heat equalizer 36 is constituted by plural heat equalization pieces 37 as in the embodiment above.

(8) In the embodiment above, the roller main body 31 is cantilevered. Alternatively, the roller main body 31 may be supported on both sides.

(9) In the embodiment above, because plural yarns Y are wound on one induction heating roller 30, differences in quality between the yarns Y are advantageously suppressed as the temperature distribution in the axial direction of the roller surface 31a is equalized. As a matter of course, the present invention is applicable to an induction heating roller on which a single yarn is wound.

(10) In the embodiment above, plural yarns Y are wound on one induction heating roller 30 and the yarns Y are heated. In this regard, the use of the induction heating roller 30 is not limited for heating the yarns Y. The roller may be used for heating materials other than the yarns Y, such as a film, paper, nonwoven fabric, a sheet such as a resin sheet, and a toner image on a sheet in a photocopier.

### [Reference Signs List]

- 30, 130:: induction heating roller (heating roller)
- 31: roller main body
- 32: coil
- 33: heating target
- 33a: inner circumferential surface
- 36, 136: heat equalizer
- 37, 137: heat equalization piece
- 37a, 37b: tapered surface
- 40, 140: pressing mechanism
- 41: interposed member
- 41a: pressing surface
- 42: spring (biasing member)

## Claims

1. A heating roller (30,130) comprising:
a roller main body (31) which includes a cylindrical heating target (33); and
a cylindrical heat equalizer (36) which is provided to be in contact with an inner circumferential surface (33a) of the heating target, the heat equalizer being higher in heat conductivity than the roller main body;
**characterised in that** the heat equalizer is lower in linear expansion coefficient than the roller main body, that heat equalization pieces (37,137) each extend in an axial direction being lined up in a circumferential direction so as to form the cylindrical heat equalizer, and that the heating roller further comprises a pressing mechanism (40,140) which is configured to press each of the heat equalization pieces toward the inner circumferential surface of the heating target.

2. The heating roller according to claim 1, further comprising a coil (32) which is provided radially inside the heating target, the heating target being induction-heated by the coil.

3. The heating roller according to claim 1 or 2, wherein, each of the heat equalization pieces has a radially outer surface which is circular-arc-shaped in a cross section orthogonal to the axial direction.

4. The heating roller according to any one of claims 1 to 3, wherein, the pressing mechanism is provided outside the heat equalization pieces in the axial direction.

5. The heating roller according to claim 4, wherein, at least one end face in the axial direction of each of the heat equalization pieces is a tapered surface (37a) which is inclined radially outward and axially outward, and, the pressing mechanism presses the tapered surface in the axial direction.

6. The heating roller according to claim 5, wherein, the pressing mechanism includes:
an interposed member (41) which has a pressing surface making contact with the tapered surface and tapered to correspond to the tapered surface in shape; and
at least one biasing member (42) which is configured to bias the interposed member in the axial direction to press the tapered surface in the axial direction by the pressing surface.

7. The heating roller according to claim 6, wherein, the interposed member is an annular member which makes contact with the tapered surface of each of the heat equalization pieces.

8. The heating roller according to claim 7, wherein, the biasing members are provided at regular intervals in the circumferential direction.

9. The heating roller according to any one of claims 5 to 8, wherein, both end surfaces in the axial direction of each of the heat equalization pieces are tapered surfaces, the pressing mechanism is provided only on one side of each of the heat equalization pieces in the axial direction, and the roller main body has an engaging surface which is tapered to correspond in shape to the tapered surface on the other side of each of the heat equalization pieces in the axial direction.

10. The heating roller according to claim 9, wherein,
the roller main body is cantilevered, and
the pressing mechanism is provided on a base end side of the roller main body in the axial direction.

11. The heating roller according to any one of claims 1 to 10, wherein, the heat equalizer is made of a carbon fiber composite.

12. A spun yarn drawing apparatus (3) comprising the heating roller of any one of claims 1 to 11, yarns being wound on a surface of the heating roller to be aligned in the axial direction.

## Patentansprüche

1. Heizwalze (30, 130), die umfasst:
einen Walzenhauptkörper (31), der ein zylindrisches Heizziel (33) einschließt; und
einen zylindrischen Wärmeausgleicher (36), der dazu bereitgestellt ist, mit einer inneren Umfangsfläche (33a) des Heizziels in Kontakt zu sein, wobei der Wärmeausgleicher eine höhere Wärmeleitfähigkeit als der Walzenhauptkörper aufweist;
**dadurch gekennzeichnet, dass** der Wärmeausgleicher einen geringeren linearen Ausdehnungskoeffizienten als der Walzenhauptkörper aufweist,
dass sich Wärmeausgleichsteile (37, 137), die sich jeweils in einer axialen Richtung erstrecken, in einer Umfangsrichtung aneinandergereiht sind, so dass sie den zylindrischen Wärmeausgleicher bilden, und
dass die Heizwalze weiter einen Mechanismus (40, 140) umfasst, der so konfiguriert ist, dass er jedes der Wärmeausgleichsteile in Richtung der inneren Umfangsfläche des Heizziels drückt.

2. Heizwalze nach Anspruch 1, die weiter eine Spule (32) umfasst, die radial innerhalb des Heizziels bereitgestellt ist, wobei das Heizziel durch die Spule induktiv erwärmt wird.

3. Heizwalze nach Anspruch 1 oder 2, wobei jedes der Wärmeausgleichsteile eine radial äußere Oberfläche aufweist, die in einem Querschnitt orthogonal zu der axialen Richtung kreisbogenförmig ist.

4. Heizwalze nach einem der Ansprüche 1 bis 3, wobei der Druckmechanismus in der axialen Richtung außerhalb der Wärmeausgleichsteile bereitgestellt ist.

5. Heizwalze nach Anspruch 4, wobei,
mindestens eine Endfläche in der axialen Richtung jedes der Wärmeausgleichsteile eine Kegelfläche (37a) ist, die radial nach außen und axial nach außen geneigt ist, und der Druckmechanismus die Kegelfläche in der axialen Richtung drückt.

6. Heizwalze nach Anspruch 5, wobei der Druckmechanismus einschließt:
ein Zwischenelement (41), das eine Druckfläche aufweist, die mit der Kegelfläche in Kontakt kommt und so kegelförmig ist, dass sie in ihrer Form der Kegelfläche entspricht; und
mindestens ein Vorspannelement (42), das so konfiguriert ist, dass es das Zwischenelement in der axialen Richtung vorspannt, um die Kegelfläche durch die Druckfläche in der axialen Richtung zu drücken.

7. Heizwalze nach Anspruch 6, wobei das Zwischenelement ein ringförmiges Element ist, das mit der Kegelfläche jedes der Wärmeausgleichsteile in Kontakt kommt.

8. Heizwalze nach Anspruch 7, wobei die Vorspannelemente in regelmäßigen Abständen in der Umfangsrichtung bereitgestellt sind.

9. Heizwalze nach einem der Ansprüche 5 bis 8, wobei
beide Endflächen in der axialen Richtung jedes der Wärmeausgleichsteile Kegelflächen sind,
der Druckmechanismus nur auf einer Seite jedes der Wärmeausgleichsteile in der axialen Richtung bereitgestellt ist und der Walzenhauptkörper eine Eingriffsfläche aufweist, die so kegelförmig ist, dass sie in ihrer Form der Kegelfläche auf der anderen Seite jedes der Wärmeausgleichsteile in axialer Richtung entspricht.

10. Heizwalze nach Anspruch 9, wobei
der Walzenhauptkörper freitragend ist, und
der Druckmechanismus an einer Basisendseite des Walzenhauptkörpers in der axialen Richtung bereitgestellt ist.

11. Heizwalze nach einem der Ansprüche 1 bis 10, wobei der Wärmeausgleicher aus einem Kohlefaserverbundwerkstoff hergestellt ist.

12. Spinnfasergarn-Zieheinrichtung (3), die die Heizwalze nach einem der Ansprüche 1 bis 11 umfasst,
wobei Fäden, die auf eine Fläche der Heizwalze gewickelt werden, in der axialen Richtung auszurichten sind.

## Revendications

1. Rouleau chauffant (30,130) comprenant :
un corps principal de rouleau (31) qui inclut une cible chauffante cylindrique (33) ; et
un correcteur thermique cylindrique (36) qui est prévu pour être en contact avec une surface circonférentielle intérieure (33a) de la cible chauffante, le correcteur thermique présentant une conductivité thermique supérieure à celle du corps principal de rouleau ;
**caractérisé en ce que** le correcteur thermique présente un coefficient d'expansion linéaire inférieur à celui du corps principal de rouleau,
des éléments de correction thermique (37,137) s'étendent chacun dans une direction axiale en étant alignés dans une direction circonférentielle de manière à former le correcteur thermique cylindrique, et
le rouleau chauffant comprend en outre un mécanisme (40,140) configuré pour presser chacun des éléments de correction thermique vers la surface circonférentielle intérieure de la cible chauffante.

2. Rouleau chauffant selon la revendication 1, comprenant en outre une bobine (32) qui est prévue radialement à l'intérieur de la cible chauffante, la cible chauffante étant chauffée par induction par la bobine.

3. Rouleau chauffant selon la revendication 1 ou 2, dans lequel chacun des éléments de correction thermique comporte une surface radialement extérieure en forme d'arc circulaire dans une coupe transversale orthogonale à la direction axiale.

4. Rouleau chauffant selon l'une quelconque des revendications 1 à 3, dans lequel le mécanisme de pression est prévu à l'extérieur des éléments de correction thermique dans la direction axiale.

5. Rouleau chauffant selon la revendication 4, dans lequel,
au moins une face d'extrémité dans la direction axiale de chacun des éléments de correction thermique est une surface conique (37a) inclinée radialement vers l'extérieur et axialement vers l'extérieur, et le mécanisme de pression presse la surface conique dans la direction axiale.

6. Rouleau chauffant selon la revendication 5, dans lequel le mécanisme de pression inclut :
un organe interposé (41) comportant une surface de pression venant au contact de la surface conique et étant de forme conique pour correspondre à la forme de la surface conique ; et
au moins un organe de sollicitation (42) qui est configuré pour solliciter l'organe interposé dans la direction axiale pour presser la surface conique dans la direction axiale par la surface de pression.

7. Rouleau chauffant selon la revendication 6, dans lequel l'organe interposé est un organe annulaire venant au contact de la surface conique de chacun des éléments de correction thermique.

8. Rouleau chauffant selon la revendication 7, dans lequel les organes de sollicitation sont prévus à des intervalles réguliers dans la direction circonférentielle.

9. Rouleau chauffant selon l'une quelconque des revendications 5 à 8, dans lequel,
les deux surfaces d'extrémité dans la direction axiale de chacun des éléments de correction thermique sont des surfaces coniques,
le mécanisme de pression est prévu uniquement sur un côté de chacun des éléments de correction thermique dans la direction axiale, et le corps principal de rouleau comporte une surface de mise en prise de forme conique pour correspondre à la forme de la surface conique de l'autre côté de chacun des éléments de correction thermique dans la direction axiale.

10. Rouleau chauffant selon la revendication 9, dans lequel,
le corps principal de rouleau est en porte-à-faux, et
le mécanisme de pression est prévu sur un côté d'extrémité de base du corps principal de rouleau dans la direction axiale.

11. Rouleau chauffant selon l'une quelconque des revendications 1 à 10, dans lequel le correcteur thermique est constitué d'un composite de fibres de carbone.

12. Appareil de tirage de fils filés (3) comprenant le rouleau chauffant selon l'une quelconque des revendications 1 à 11,
des fils étant enroulés sur une surface du rouleau chauffant pour être alignés dans la direction axiale.
